# EUROPÄISCHE PATENTSCHRIFT

(11) **EP 2 366 485 B1**
(45) Veröffentlichungstag und Bekanntmachung des Hinweises auf die Patenterteilung: **25.12.2013**
(21) Anmeldenummer: 10156715.4
(22) Anmeldetag: 17.03.2010
(51) Int. Cl.: B23K 9/167, B23K 9/28

(54) **Lichtbogenschweißgerät mit einem gesteuert gekühlten WIG-Brenner**
Arc welding device with a controlled cooled WIG torch
Appareil de soudage à l'arc muni d'une torche à refroidissement liquide controllé

(43) Veröffentlichungstag der Anmeldung: 21.09.2011
(73) Patentinhaber: EWM AG, 56271 Mündersbach (DE)
(72) Erfinder: Szczesny, Michael, 56235 Ransbach-Baumbach (DE)
(74) Vertreter: Cohausz & Florack

(56) Entgegenhaltungen:
- EP-A1- 2 008 750
- WO-A1-2010/005368
- US-A1- 2005 016 978

## Beschreibung

Die vorliegende Erfindung betrifft ein WIG-Lichtbogenschweißgerät mit einem Brennerkopf, an dessen Unterseite eine Wolframelektrode angeordnet ist, welche einen zum Werkstück hin sich kegelförmig verjüngenden Spitzenbereich des Wolframelektrodenkörpers aufweist, mit einem ein Kühlmittel zur Beaufschlagung des Brennerkopfes bereit stellenden Kühlmittelkreislauf und mit einer eine Steuereinheit aufweisenden Energiequelle zur elektrischen Leistungsversorgung des Schweiß- oder Lötprozesses. Darüber hinaus betrifft die Erfindung ein Verfahren zum Betreiben eines solchen WIG-Lichtbogenschweißgerätes sowie einen Brenner zur Verwendung im Zusammenhang mit einem solchen WIG-Lichtbogenschweißgerät.

Beim WIG(Wolfram-Inertgas)-Schweißen brennt der (Plasma)-Lichtbogen zwischen einer nicht abschmelzenden Wolframelektrode und dem Werkstück. Es findet eine mit einer Spitze versehene Elektrode aus reinem Wolfram oder legiertem Wolfram Verwendung und der Lichtbogen und die Schweißzone werden durch einen Mantel aus inertem Gas geschützt. Herkömmliche Brenner, die bei dem WIG-Schweißverfahren verwendet werden, enthalten ein die Wolframelektroden fixierendes Stromkontaktrohr, welches zugleich ein Klemmelement für die Wolframelektrode darstellt sowie eine Schutzgasdüse, die das Stromkontaktrohr und die Wolframelektrode umgibt. Unter einem bestimmten Winkel zur Vertikalen wird ein Schweißzusatzdraht zugeführt, von welchem ein Materialübertrag auf das Werkstück erfolgt. Während des Schweißvorgangs wird der sich zwischen Wolframelektrode und Werkstück ausbildende Lichtbogen von einer Energiequelle gespeist, welche entsprechende elektronische Steuerungsmittel aufweist.

Aus der DE 4314097 A1 ist ein WIG-Lichtbogenschweißgerät der eingangs genannten Art bekannt, welches eine stabförmige Wolframelektrode aufweist und bei dem zwischen einem Außenkörper des Brennerkörpers und einem Elektrodenhalter ein Kühlkörper vorgesehen ist, dessen Werkstoff eine größere Wärmeleitfähigkeit aufweist als das Werkstück des Außenkörpers bzw. Elektrodenhalters. Der Kühlkörper wird von einem Kühlmedium, insbesondere Wasser, durchströmt. Aus der DE 1933639 A und DE 3930267 A1 ist ein Plasmaschweißbrenner bekannt, welcher eine in einem Kühlkörper arretierte stabförmige Wolframelektrode mit einer sich kegelförmig verjüngenden Elektrodenspitze aufweist, wobei die Kegelspitze der Wolframelektrode zum bearbeiteten Werkstück gerichtet ist. Bei einem solchen Plasmaschweißbrenner brennt der Lichtbogen zwischen der Elektrode und dem Werkstück im Wesentlichen beruhend auf thermischer Emission an der Elektrodenspitze.

Aus der WO 2010/005368 A1 ist eine Kühlvorrichtung zur Flüssigkeitskühlung zumindest eines Bauteils eines Schweißgeräts bekannt sowie ein Schweißgerät mit einer solchen Kühlvorrichtung. Die Kühlvorrichtung umfasst einen Kühlmitteltank, eine Auslassleitung für Kühlmittel aus dem Kühlmitteltank zu dem Bauteil, wobei die Auslassleitung einen Auslass zur Verbindung mit dem Schweißgerät umfasst, eine Rücklaufleitung zum Rückführen von erhitzter Flüssigkeit zurück in den Kühlmitteltank, wobei die Rücklaufleitung einen Einlass zur Verbindung mit dem Schweißgerät umfasst, und eine Pumpe, welche zum Pumpen von Kühlmittel vom Kühlmitteltank zu dem Bauteil mit der Auslassleitung verbunden ist. Die Kühlvorrichtung umfasst Mittel zum Verhindern eines Kühlmittelflusses durch die Auslassleitung und/oder die Rücklaufleitung wenn die Pumpe ausgeschaltet ist.

Aus der US 2005/0016978 A1 ist ein Kühlsystem bekannt, das zur Versorgung einer Schweißkomponente mit Kühlmittel mit dieser verbunden ist. Das Kühlsystem lässt bei Aktivierung der Schweißkomponente automatisch Kühlmittel durch die Schweißkomponente zirkulieren. Eine Steuerung ist eingerichtet, das Kühlsystem derart zu regulieren, dass bei Aktivierung der Schweißkomponente Kühlmittel zumindest durch die Schweißkomponente fließt und nach der Deaktivierung des Schweißbrenners solange zirkuliert, bis eine Temperatur des Kühlmittels unter einen bestimmten Wert gefallen ist oder eine bestimmte Zeitperiode abgelaufen ist. Das Kühlsystem ist ausgestaltet, um integriert im Gehäuse eines Leistungsteils angeordnet zu werden.

Aus der EP 2008750 A1 ist ein Brenner für ein WIG-Lichtbogenschweißgerät der eingangs genannten Art bekannt, bei welchem durch entsprechende konstruktive Gestaltung des Kühlkörpers eine sehr intensive Kühlung der Elektrode erfolgt und mit dem eine Erhöhung der Energiedichte des WIG-Schweißbrenners erreicht werden kann. Bei dieser bekannten Vorrichtung verschiebt sich aufgrund der intensiven Kühlung die Emissionsisotherme des Lichtbogens in Richtung zum freien Ende der Elektrodenspitze hin. Dadurch entsteht ein gebündelter Lichtbogen und damit verbunden eine erhöhte Energiedichte an der Oberfläche des Werkstücks. Durch eine solche Lösung wird eine Erhöhung der Schweißgeschwindigkeit beim WIG-Schweißen ermöglicht sowie eine Verringerung der Streckenenergie, des Verzuges sowie der thermischen Beeinflussung des Grundwerkstoffes erreicht. Allerdings tritt bei dieser bekannten Vorrichtung ein Nachteil insoweit auf, als ein vergleichsweise hoher Verschleiß der Wolframelektrode zu verzeichnen ist.

Der Erfindung liegt davon ausgehend die Aufgabe zugrunde, eine Vorrichtung bzw. ein Verfahren der eingangs genannten Art dahingehend weiterzuentwickeln, dass unter Erhalt der hohen Schweißgeschwindigkeit eine Herabsetzung des Verschleißes der Wolframelektrode erreicht wird.

Diese Aufgabe wird bei einer Vorrichtung bzw. einem Verfahren der eingangs genannten Art dadurch gelöst, dass im Kühlmittelkreislauf eine Dosiereinheit für die Kühlmittelmenge vorgesehen ist, wobei die Dosiereinheit von der Steuereinheit ansteuerbar ist derart, dass infolge einer Reduzierung der Kühlmittelmenge innerhalb eines vorgebbaren zeitlichen Abstands vor dem Ausschaltzeitpunkt des Lichtbogens der Wärmestrom (*Q̇*) vom Spitzenbereich des Wolframelektrodenkörpers zum Brennerkopf gegenüber dem vorherigen Betriebszustand reduzierbar ist bzw. infolge einer Erhöhung der Kühlmittelmenge erst innerhalb eines vorgebbaren zeitlichen Abstands nach dem Einschaltzeitpunkt des Lichtbogens der Wärmestrom (*Q̇*) vom Wolframelektrodenkörper zum Brennerkopf gegenüber dem vorherigen Betriebszustand erhöhbar ist.

Die Erfindung zeichnet sich dadurch aus, dass im Vergleich zu den aus dem Stand der Technik bekannten Vorrichtungen bzw. Verfahren, bei denen eine kontinuierliche, ungesteuerte Beaufschlagung des Brennerkopfes mit dem Kühlmedium erfolgt, eine dosierte Steuerung des Kühlmediums und damit eine Dosierung der Kühlwirkung erfolgt. Hierdurch lässt sich in vorteilhafter Weise der Wärmestrom beeinflussen, der beim Kühlen von der heißen Elektrodenspitze in Richtung des gekühlten Brennerkopfes fließt. Im normalen Betriebszustand, unter stationären Bedingungen, ist dieser Wärmestrom im wesentlichen konstant. Gemäß der Erfindung wird der Wärmestrom jedoch infolge der dosierten Kühlmittelmengensteuerung gezielt beeinflusst: wenn nämlich zum Ende des Schweißvorgangs hin zu dem Zeitpunkt, zu dem der Lichtbogen durch Abschalten des Schweißstromes ausgeschaltet wird, die Kühlmittelzufuhr bereits kurz zuvor reduziert oder vollständig ausgeschaltet wurde, verbleibt zum Zeitpunkt des Ausschaltens des Lichtbogens aufgrund des zuvor reduzierten von der Elektrodenspitze weg gerichteten Wärmestromes nur noch ein geringeres thermisches Gefälle zwischen der Spitze der Wolframelektrode und dem mit dem Brennerkopf verbundenen Bereich als bei weiterhin eingeschalteter Kühlung. Dies führt zu einem herabgesetzten absoluten Temperaturgefälle ΔT zwischen Spitze und Ende der Elektrode sowie auch zu einem reduzierten Temperaturgradienten dT/t. Durch die erfindungsgemäße Kopplung zwischen der Steuerung der elektrischen Größen für den Lichtbogen einerseits und der Kühlmitteldosierung andererseits kann eine optimale Anpassung des in der Wolframelektrode herrschenden Temperaturgradienten an die jeweiligen Schweißbedingungen stattfinden. Diese Maßnahme wirkt sich bevorzugt beim Abschalten des Lichtbogens, also am Ende des Schweißvorgangs, aus.

In gleicher Weise werden die Temperaturdifferenz ΔT und der Temperaturgradient dT/dt auch im Prozessbeginn reduziert, wenn erst zu einem vorgegebenen Zeitpunkt nach dem Einschalten des Schweißstromes die Kühlung teilweise oder ganz eingeschaltet und damit der Kühlmittelstrom erhöht wird.

Durch entsprechende regeltechnische Prozesse wird in beiden oben beschriebenen Fällen (Ausschalten bzw. Einschalten des Lichtbogens) ein "Zeitfenster" um den Zeitpunkt des tatsächlichen Schaltens des für den Lichtbogen verantwortlichen Schweißstromes gebildet. Zu einem geeigneten Zeitpunkt innerhalb dieses Zeitfensters wird die Kühlmitteldosierung derart variiert, dass gegenüber dem vorherigen Betriebszustand des WIG-Brenners die Kühlmittelmenge und damit der Wärmestrom reduziert bzw. erhöht wird. Es versteht sich, dass ein solches Zeitfenster auf unterschiedliche Weise realisiert sein kann, z.B. durch Hardware-Bauelemente oder durch geeignete Software.

Sowohl das Reduzieren als auch das Erhöhen des Wärmestromes kann nach bestimmten zeitlichen Funktionen erfolgen, insbesondere nach Sprungfunktionen oder nach linearen Funktionen, wobei die Steigung der linearen Funktion an den Prozess anpassbar ist. Auch jegliche andere, insbesondere nicht-lineare, Funktionen, nach denen der Wärmestrom in seinem zeitlichen Verhalten beinflusst wird, sind denkbar.

Das erfindungsgemäß vorgesehene Zeitfenster wird gebildet durch eine Vorlaufzeit tᵥ vor dem Ausschalt- bzw. Einschaltzeitpunkt des Schweißstromes und einer Nachlaufzeit nach dem Einschalten bzw. Ausschalten des Schweißstromes. Eine noch weiter verbesserte Ausführungsform der Erfindung ergibt sich dadurch, dass neben dem oben beschriebenen Zeitglied ein weiteres Zeitglied vorgesehen ist, durch welches nach dem Ausschalten des Lichtbogens und der bereits erfolgten Reduzierung des Kühlmittelstromes ein erneutes Einschalten des Lichtbogens gesteuert wird. Hierdurch kann ausgeglichen werden, wenn der Schweißstrom ggf. zu früh herabgesetzt wurde. Auch bezüglich der technischen Ausgestaltung des weiteren Zeitgliedes gelten die oben ausgeführten Zusammenhänge in Bezug auf das erste Zeitglied.

Die Beeinflussung des Wärmestroms *Q̇* gegen Ende bzw. zu Beginn des Schweißprozesses erfolgt also durch die gesteuerte Dosierung des Kühlmittels. Bevorzugt erfolgt die Dosierung über die Steuerung der Menge des Kühlmittels, es sind aber auch andere Steuerungsmöglichkeiten, beispielsweise durch Druckänderung im Kühlmittelkreislauf, denkbar.

Weitere konstruktive Ausgestaltungen der erfindungsgemäßen Lösung sind in den Unteransprüchen 5 bis 12 beschrieben. Der auf ein Verfahren zum Beschreiben eines WIG-Schweißgerätes gerichtete Aspekt der Erfindung wird in den Ansprüchen 14 bis 18 beschrieben, durch welches Verfahren sich ebenfalls die oben genannten Vorteile ergeben.

Insbesondere ist eine wesentliche Gestaltungsmöglichkeit der Erfindung dadurch gegeben, dass die Vorlaufzeit vor dem Ausschaltzeitpunkt bzw. dem Einschaltzeitpunkt des Lichtbogens gewählt wird in Abhängigkeit von der Amplitude des Schweißstroms, jeweils unter Berücksichtigung des zeitlichen Verlaufes des Schweißstroms, weswegen als Amplitude insbesondere der Mittelwert oder der Effektivwert des Schweißstroms in Frage kommen. Eine weitere bevorzugte Anwendung des erfindungsgemäßen Verfahrens lässt sich auf das sogenannte Pulsschweißen richten. Dann erfolgt eine Variation der Intensität des Lichtbogens regelmäßig in Abhängigkeit des Taktverhältnisses beim Pulsschweißen. Unter Anwendung der erfindungsgemäßen Lösung erfolgt entsprechend dem gepulsten Schweißstromverlauf auch ein gepulster Kühlvorgang.

Im Kontext der Erfindung ist eine Beschränkung auf das Element Wolfram für die Elektrode keineswegs gegeben, vielmehr sind auch Legierungen von Wolfram sowie andere chemische Elemente und deren Legierungen mit entsprechenden Materialeigenschaften von der Erfindung umfasst. Auch ist das Merkmal der Kegelförmigkeit der Elektrode nicht als beschränkend auszulegen, vielmehr ist jede andere Elektrodenkontur, welche von einem zylindrischen Grundkörper sich zu der dem Werkstück zugewandten Vorderseite hin verjüngt, ebenfalls von der Erfindung umfasst.

Die Erfindung wird im Folgenden anhand von Ausführungsbeispielen näher erläutert, dabei zeigen:
Fig. 1 eine schematische Darstellung einer Anordnung zum WIG-Schweißen nach dem ersten Ausführungsbeispiel der Erfindung,
Fig. 2 zeitliche Verläufe des Schweißstromes (Fig. 2a) sowie zeitliche Verläufe des Wärmestroms (*Q*) von der Elektrodenspitze zum Brennerkopf hin (Fig. 2b-2e),
Fig. 3a eine Seitenansicht eines Wolfram-Inertgas-Schweißbrennerkopfes nach dem zweiten Ausführungsbeispiel der Erfindung,
Fig. 3b eine Schnittdarstellung des WIG-Schweißbrennerkopfes nach Fig. 3a.

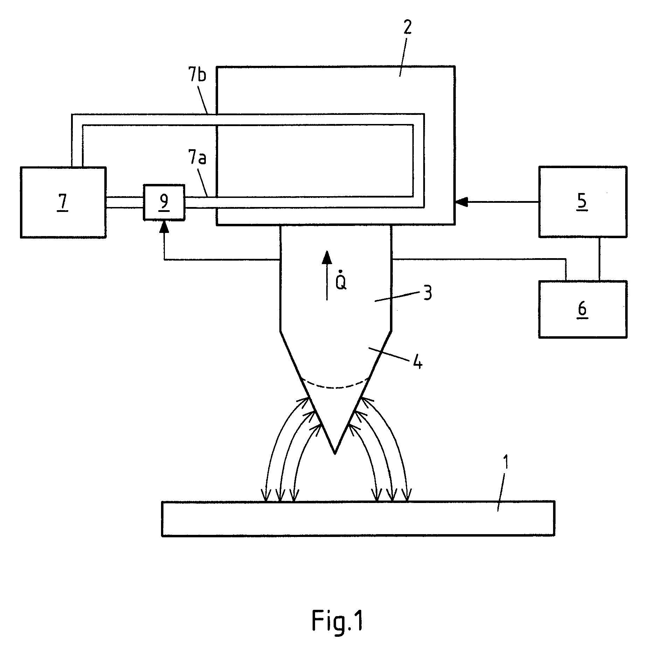

Figur 1 zeigt ein WIG-Lichtbogenschweißgerät nach dem ersten Ausführungsbeispiel der Erfindung. Dieses besteht aus einem Brennerkopf 2, an dessen Unterseite sich eine Wolframelektrode 3 erstreckt, welche in einem kegelstumpfförmig ausgebildeten spitz zulaufenden Elektrodenkörper 4 mündet, wobei dessen Spitze dem zu schweißenden Werkstück 1 zugewandt angeordnet ist. Der Brennerkopf 2 wird zum einen elektrisch über eine Energiequelle 5 versorgt, welche über eine Steuereinrichtung 6 angesteuert wird. Andererseits wird der Brennerkopf über einen Kühlkreislauf 7, 7a, 7b mit einem Kühlmedium, insbesondere Wasser, versorgt, welches über eine Eintrittsöffnung 7a in den Brennerkopf 2 eintritt und diesen über eine Eintrittsöffnung 7b wieder verlässt. Die Umwälzung des Kühlmittels erfolgt über eine entsprechende Kühlmittelpumpe 7. Im Bereich des Kühlmitteleinlasses 7a ist eine Dosiereinrichtung 9 für das Kühlmittel vorgesehen, welche elektrisch vom Ausgang der Steuereinrichtung 6 für die Energiequelle 5 angesteuert wird. Dies wird durch die den Ausgang der Steuereinrichtung 6 mit dem Eingang der Dosiereinrichtung 9 verbindende Linie symbolisiert.

Bei entsprechender elektrischer Beaufschlagung des Brennerkopfs 2 mit elektrischer Energie aus der Energiequelle 5 bildet sich an der dem Werkstück 1 zugewandten Spitze der Wolframelektrode 3 ein Plasmalichtbogen, symbolisiert durch die senkrecht aus der Oberfläche des Elektrodenkörpers 4 austretenden Pfeile, die jeweils auf dem Werkstück 1 münden. Durch den Kühlmittelkreislauf 7, 7a, 7b wird der Wolframelektrode Wärme entzogen, dargestellt durch den nach oben gerichteten Pfeil, welcher den Wärmestrom (*Q̇*) symbolisiert.

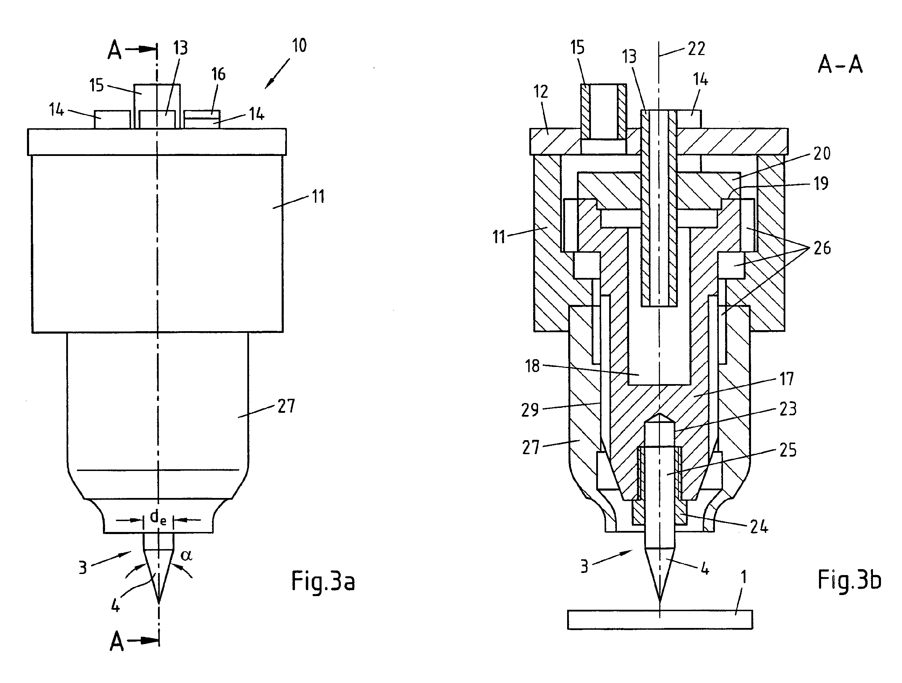

Im Folgenden werden die Fig. 3a und 3b, die das zweite Ausführungsbeispiel der Erfindung zeigen, gemeinsam betrachtet. Der darin dargestellte Brennerkopf 10 eines Wolfram-Inertgas-Schweißbrenners besteht aus einem Gehäusezylinder 11 mit einem oberen Deckelverschluss 12, durch den eine Vorlaufleitung 13 und zwei Rücklaufleitungen 14 für Kühlmittel sowie eine Inertgaszuleitung 15 und ein Elektroanschluss 16 für den Betrieb der Wolframelektrode 3 geführt sind, einem innerhalb des Gehäusezylinders 11 befindlichen länglichen Kühlkörper 17 mit parallel zur Brennerkopfachse 22 gerichteten Längskanälen 26 und mit einem darin befindlichen länglichen, an der oberen Stirnseite 19 des Kühlkörpers 17 offenen Hohlraum 18 und einem darauf befindlichen Innendeckelverschluss 20, durch den die Leitungen 13,14 für das Kühlmittel führen. Darüber hinaus ist vorgesehen eine auf der unteren Stirnseite 21 des Kühlkörpers 17 längs der Brennerkopfachse 22 eingelassene Gewindebohrung 23 sowie eine in der Gewindebohrung 23 arretierbare Elektrodenhalterung 24 mit einem inneren zylindrischen Durchgang 25. Des weiteren weist der Brennerkopf 10 eine mit dem Gehäusezylinder 11 in Verbindung stehende verschraubbare Gasdüse 27 auf, die den Kühlkörper 17 und die Elektrodenhalterung 24 umgibt. Der in den inneren zylindrischen Durchgang 25 eingebrachte zylindrische und mit einer Kegelspitze 4 versehene Wolframelektrodenkörper 3 weist einen Durchmesser dₑ auf, und dessen Spitze ist in einem vorgegebenen Abstand zur unteren Stirnseite 21 des Kühlkörpers 17 angeordnet. Der Öffnungswinkel α der kegelförmigen Elektrodenspitze 4 kann zwischen 7° und 90° liegen.

Dabei ist der thermische Widerstand der der Wolframelektrode 3 in Wärmeflußrichtung nachgeordneten Materialien im Vergleich zum Elektrodenkörper selbst niedrig und die Kühlung ist über den Kühlkörper 17 bis an die Gewindebohrung 23 oder direkt an die Elektrode 3 herangeführt. Dadurch bildet sich eine Emissionsisotherme aus, die je nach Intensität der Kühlung der Elektrode mehr oder weniger in Richtung zum freien Spitzenende des Wolframelektrodenkörpers hin 3 verschoben ist. Je intensiver die Kühlung ist, d.h. je intensiver der Wärmestrom (*Q̇*) in Richtung des Brennerkopfes ist, desto mehr ist die Emissionsisotherme zur Spitze des Wolframelektrodenkörpers hin verschoben.

Die arretierbare Wolframelektrode 3 weist an ihrem oberen, zylindrischen Teil ein an die Gewindebohrung 23 angepasstes Gewinde auf und ist unter direktem Wärmekontakt in die Gewindebohrung 23 eingeschraubt. Alternativ dazu ist vorgesehen, dass eine einen Durchgang 25 aufweisende Eiektrodenhalterung 24 vorgesehen ist, in der der Wolframelektrodenkörper mittels Löten oder Einpressen eingepasst befestigt ist und die ein der Gewindebohrung 23 angepasstes Außengewinde zum haltenden Einschrauben in die Gewindebohrung 23 besitzt.

Somit ist der Wolframelektrodenkörper entweder, im Falle eines eigenen Gewindes, selbst austauschbar oder, im Falle der Einbindung in die von außerhalb des Brennerkopfes 30 betätigbare Elektrodenhalterung 24 mit der Elektrodenhalterung 24 gemeinsam austauschbar.

Die Elektrodenhalterung 24 besteht vorzugsweise aus einem Material mit niedrigem thermischem Widerstand, insbesondere aus Kupfer, Silber oder deren Legierungen. Der zylindrische Teil des Wolframelektrodenkörpers und die Elektrodenhalterung 24 sind kraft- oder stoffschlüssig miteinander verbunden, wobei zwischen beiden ein geringer elektrischer und thermischer Widerstand vorgesehen ist.

Zwischen dem länglichen Kühlkörper 17 und der Gasdüse 27 sind in axialer Richtung zur Brennerkopfachse 22 verlaufende Längskanäle 26 vorgesehen, die im Bereich der Aussenwandung 29 des Kühlkörpers 17 und/oder auch an der Innenwandung der Gasdüse 27 vorgesehen sind.

Die Kühlung der Wolframelektrode 3 ist bevorzugt als Flüssigkeitskühlung ausgebildet. Es ist aber auch jedes andere zur Kühlung geeignete Medium möglich. Dabei erstreckt sich die Vorlaufleitung 13 bis weit in den länglichen Hohlraum 18 des Kühlkörpers 17 hinein, um das einströmende Kühlmittel direkt in den der Wolframelektrode 3 benachbarten Bereich einzuleiten. Die Rücklaufleitung 14 endet unmittelbar hinter dem Innendeckelverschluss 20 und dient zum Abströmen des im Hohlraum 18 des Kühlkörpers 17 erwärmten Kühlmittels.

Während des Erzeugens des Lichtbogens und im weiteren Ablauf des Schweißprozesses strömt das Prozessgas über die Prozessgaszuleitung 15 durch den unter dem Deckelverschluss 12 befindlichen Freiraum über die Längskanäle 26 schließlich an der kegelförmigen Wolframelektrodenspitze 4 vorbei in Richtung auf das zu bearbeitende Werkstück 1.

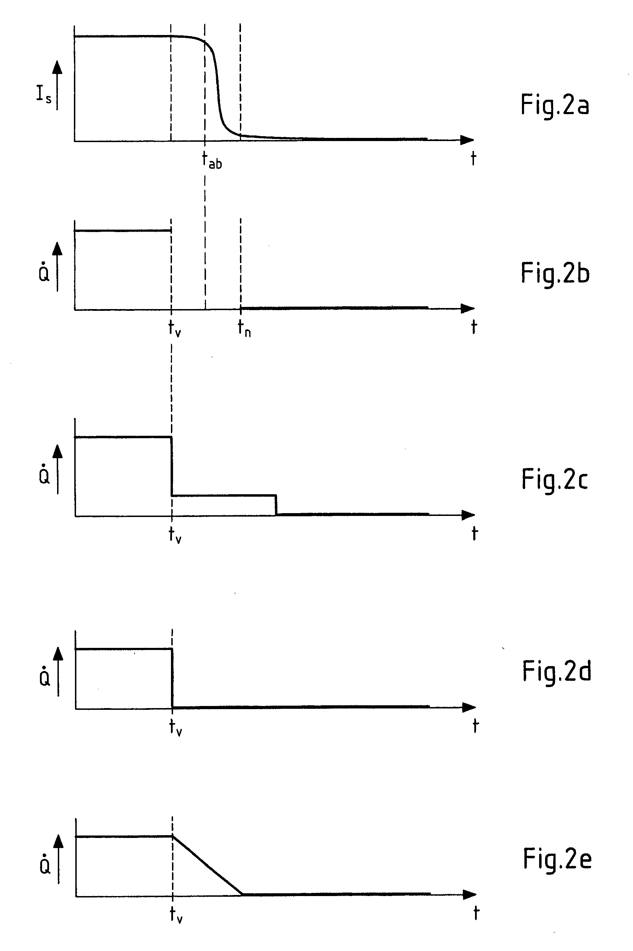

Die Funktion der erfindungsgemäßen Vorrichtung bzw. des erfindungsgemäßen Verfahrens wird im Folgenden anhand der Figuren 2a bis 2e näher erläutert.

Die Darstellung in Figur 2 ist für den Fall gewählt, dass der zuvor fließende Schweißstrom vorgegebener Größe zu einem Zeitpunkt t_{ab} abgeschaltet wird und anschließend auf den Wert 0 abklingt. Die zeitliche Darstellung des Schweißstroms ist in Figur 2a dargestellt.

Figur 2b zeigt den erfindungsgemäß angestrebten Verlauf des sich durch die entsprechend dosierte Kühlung ergebenden Wärmestroms *Q̇* vom Wolframelektrodenkörper 3 zum Brennerkopf 2 (Fig.1) bzw. 10 (Fig.3a). Gegenüber dem stationären Wärmestrom *Q̇* , welcher während des Schweißprozesses infolge der stetigen Kühlung fließt, soll der Wärmestrom *Q̇* gegen Ende des Schweißprozesses reduziert werden, vorzugsweise auf den Wert Null. Diese Reduktion soll innerhalb des in Fig. 2b dargestellten Zeitfensters stattfinden, welches um den Abschaltzeitpunkt t_{ab} herum durch die Vorlaufzeit tᵥ und die Nacheilzeit tₙ definiert ist. D.h., die Kühlung wird bereits zum Zeitpunkt tᵥ < t_{ab} reduziert und soll spätestens zum Zeitpunkt tₙ > t_{ab} den reduzierten Wert erreicht haben.

Wie aus Figur 2c hervorgeht, kann der Wärmestrom *Q̇* gegen Ende des Schweißprozesses beispielsweise in einer solchen Weise reduziert werden, dass er zur Zeit tᵥ zunächst um einen bestimmten Wert und zu einem späteren Zeitpunkt auf einen noch weiter reduzierten Wert, insbesondere den Wert 0, ebenfalls sprunghaft abgesenkt wird.

Alternativ dazu kann gemäß den Funktionen in Figur 2d der Wärmestrom *Q̇* zum Zeitpunkt tᵥ auch in einem einzigen Sprung vom bisherigen Niveau auf den Wert 0 reduziert werden. Alternativ dazu zeigt Figur 2e, dass Wärmestrom *Q̇* beginnend mit dem Zeitpunkt tᵥ innerhalb einer vorgegebenen linearen Zeitfunktion auf den Wert 0 herabgeführt wird.

Die entsprechende Auswahl der zeitlichen Funktionen, mit denen der Wärmestrom *Q̇* gegen Ende des Schweißprozesses reduziert wird, erfolgt in Abhängigkeit von den gegebenen Prozessparametern des WIG-Schweißprozesses, jeweils unter Berücksichtigung der thermischen Leitfähigkeiten der Konstruktionselemente.

## Patentansprüche

1. WIG-Lichtbogenschweißgerät mit einem Brennerkopf (2, 10), an dessen Unterseite eine Wolframelektrode (3), angeordnet ist, welche einen zum Werkstück (1) hin sich, vorzugsweise kegelförmig, verjüngenden Spitzenbereich (4) aufweist, mit einem ein Kühlmittel zur Beaufschlagung des Brennerkopfes (2,10) bereit stellenden Kühlmittelkreislauf (7, 7a, 7b) und mit einer eine Steuereinheit (6) aufweisenden Energiequelle ( 5) zur elektrischen Leistungsversorgung des Schweiß- oder Lötprozesses, wobei im Kühlmittelkreislauf (7, 7a, 7b) eine ansteuerbare Dosiereinheit (9) für das Kühlmittel vorgesehen ist, **dadurch gekennzeichnet, dass** die Dosiereinheit (9) von der Steuereinheit (6) angesteuert wird derart, dass infolge einer Reduzierung der Kühlmittelmenge innerhalb eines vorgebbaren zeitlichen Abstands vor dem Ausschaltzeitpunkt (t_{ab}) des Lichtbogens der Wärmestrom (*Q̇*) vom Wolframelektrodenkörper (4) zum Brennerkopf (2) gegenüber dem vorherigen Betriebszustand des WIG-Lichtbogenschweißgeräts reduziert wird oder infolge einer Erhöhung der Kühlmittelmenge erst innerhalb eines vorgebbaren zeitlichen Abstands nach dem Einschaltzeitpunkt des Lichtbogens der Wärmestrom (*Q̇*) vom Wolframelektrodenkörper (4) zum Brennerkopf (2) gegenüber dem vorherigen Betriebszustand erhöht wird.

2. Vorrichtung nach Anspruch 1, **dadurch gekennzeichnet, dass** der Steuereinrichtung (6) ein Zeitglied derart zugeordnet ist, dass der vorgebbare zeitliche Abstand durch ein Zeitfenster definierbar ist, welches im Bereich um den Ausschalt- bzw. Einschaltzeitpunkt des Schweißstromes herum ausgebildet ist und dessen Breite durch die Werte von Vorlaufzeit (Tᵥ) und Nacheilzeit (Tₙ) festgelegt ist.

3. Vorrichtung nach Anspruch 2, **dadurch gekennzeichnet, dass** die Länge der Vorlaufzeit (Tᵥ) und/oder die Länge der Nachlaufzeit (Tₙ) proportional ist zur Amplitude des Schweißstroms.

4. Vorrichtung nach einem der Ansprüche 1 bis 3, **dadurch gekennzeichnet, dass** die Steuereinrichtung (6) ein weiteres Zeitglied aufweist, durch welches der Schweißstrom (Iₛ) ansteuerbar ist derart, dass nach einer weiteren vorgebbaren Zeit nach dem Ausschalten des Lichtbogens und der Reduzierung der Kühlmittelmenge der Schweißstrom wieder einschaltbar ist.

5. Vorrichtung nach einem Ansprüche der 1 bis 4, **dadurch gekennzeichnet, dass** der Brennerkopf aus einem Gehäusezylinder (11) mit einem oberen Deckelverschluss (12) besteht, durch den zumindest eine Vorlaufleitung (13) und eine Rücklaufleitung (14) für das Kühlmittel sowie eine Prozessgaszuleitung (15) und ein Elektroanschluss (16) für den Betrieb der Wolframelektrode (3) geführt sind.

6. Vorrichtung nach Anspruch 5, **dadurch gekennzeichnet, dass** der Brennerkopf (2) einen innerhalb des Gehäusezylinders (11) befindlichen länglichen Kühlkörper (17) und einen darin befindlichen länglichen, an der oberen Stirnseite (19) des Kühlkörpers (17) offenen Hohlraum (18) aufweist sowie einen darauf befindlichen Innendeckelverschluss (20), durch den die Leitungen(13,14) für das Kühlmittel führen.

7. Vorrichtung nach den Ansprüchen 5 oder 6, **dadurch gekennzeichnet, dass** der Brennerkopf (2, 10) eine auf der unteren Stirnseite (11) des Kühlkörpers (17) längs der Brennerkopfachse (22) eingelassene Gewindebohrung (23) aufweist, in die die Wolframelektrode (3) einschraubbar ist.

8. Vorrichtung nach einem der Ansprüche 5 bis 7, **dadurch gekennzeichnet, dass** der Brennerkopf eine mit dem länglichen Kühlkörper (17) unter Einbindung von Längskanälen (26) in Verbindung stehende verschraubbare Gasdüse (27) aufweist, die den Kühlkörper (17) und die Wolframelektrode (3) umgibt.

9. Vorrichtung nach den Ansprüchen 1 bis 8, **dadurch gekennzeichnet, dass** die Wolframelektrode (3) in ihrem oberen dem Brennerkopf zugewandten Abschnitt einen zylindrischen Bereich mit einem an die Gewindebohrung (23) angepassten Gewinde aufweist.

10. Vorrichtung nach den Ansprüchen 1 bis 9, **dadurch gekennzeichnet, dass** die Elektrode (3) mit einer einen Durchgang (25) aufweisenden Elektrodenhalterung (24) zusammen gefügt ist, in den der zylindrische Bereich der Elektrode (3) mittels Löten oder Einpressen eingepasst befestigt ist, wobei die Elektrodenhalterung (24) ein der Gewindebohrung (23) angepasstes Außengewinde zum halternden Einschrauben in die Gewindebohrung (23) besitzt.

11. Vorrichtung nach den Ansprüchen 1 bis 10, **dadurch gekennzeichnet, dass** die Kühlung innerhalb des Kühlkörpers (17) als Flüssigkeitskühlung ausgebildet ist.

12. Vorrichtung nach den Ansprüchen 1 bis 11, **dadurch gekennzeichnet, dass** zwischen dem länglichen Kühlkörper (17) und der Gasdüse (27) in axialer Richtung zur Brennerkopfachse (22) gerichtete Längskanäle (26) vorhanden sind, die an der Außenwandung (29) des Kühlkörpers (17) und/oder an der Innenwandung der Gasdüse (27) angebracht sind.

13. Brenner für ein Lichtbogenschweißgerät mit einem Brennerkopf und mit einer Wolframelektrode, **dadurch gekennzeichnet, dass** der Brennerkopf (2, 10) nach einem der Ansprüche 1 bis 12 ausgebildet ist.

14. Verfahren zum Betreiben eines WIG-Lichtbogenschweißgerätes, bei dem ein Brennerkopf (2), an dessen Unterseite eine Wolframelektrode, angeordnet ist, welche einen zum Werkstück (1) hin sich, insbesondere kegelförmig, verjüngenden Spitzenbereich (4) aufweist, über einen Kühlkreislauf mit einem Kühlmittel beaufschlagt wird und bei dem die elektrische Leistungsversorgung des Schweiß- oder Lötprozesses über eine eine Steuereinheit (6) aufweisende Energiequelle (5) erfolgt, **dadurch gekennzeichnet, dass** das Kühlmittel im Kühlmittelkreislauf (7, 7a, 7b) derart dosiert wird, dass der Wärmestrom (*Q̇*) vom Spitzenbereich (4) der Elektrode (3) zum Brennerkopf (2,10) hin durch eine Reduzierung der Kühlmittelmenge innerhalb eines vorgebbaren zeitlichen Abstands vor dem Ausschaltzeitpunkt (t_{ab}) des Lichtbogens gegenüber dem vorherigen Betriebszustand des WIG-Lichtbogenschweißgeräts reduziert wird oder dass der Wärmestrom (*Q̇*) vom Spitzenbereich (4) der Elektrode (3) zum Brennerkopf (2,10) hin durch eine Erhöhung der Kühlmittelmenge erst innerhalb eines vorgebbaren zeitlichen Abstands nach dem Einschaltzeitpunkt des Lichtbogens gegenüber dem vorherigen Betriebszustand des WIG-Lichtbogenschweißgeräts erhöht wird.

15. Verfahren nach Anspruch 14, **dadurch gekennzeichnet, dass** innerhalb des vorgebbaren zeitlichen Abstands vor dem Zeitpunkt des Ausschaltens des Lichtbogens die Kühlmittelmenge auf den Wert Null reduziert wird.

16. Verfahren nach Anspruch 15, **dadurch gekennzeichnet, dass** die Kühlmittelmenge zu einer Zeit tᵥ vor dem Abschalten des Lichtbogens gemäß einer vorgebbaren zeitlichen Funktion, insbesondere einer Sprungfunktion oder einer linearen Funktion, auf den Wert Null reduziert wird.

17. Verfahren nach einem der Ansprüche 14 bis 16, **dadurch gekennzeichnet, dass** die Zeit tᵥ abhängig ist von der Amplitude des Schweißstromes.

18. Verfahren nach einem der vorherigen Verfahrensansprüche 14 bis 17, **dadurch gekennzeichnet, dass** während eines gepulsten Schweißstromprozesses auch ein gepulstes Kühlen erfolgt.

## Claims

1. TIG arc welding device with a torch head (2, 10), on the underside of which is arranged a tungsten electrode (3) which has a tip region (4) tapering towards the workpiece (1) in a preferably conical manner, with a coolant circuit (7, 7a, 7b) that provides a coolant for supplying the torch head (2, 10) and with an energy source (5) having a control unit (6) for supplying the electrical power for the welding or soldering process, wherein a controllable metering unit (9) for the coolant is provided in the coolant circuit (7, 7a, 7b), **characterized in that** the metering unit (9) is controlled by the control unit (6) in such a manner that, as a result of a reduction in the amount of coolant within a definable time interval before the time (t_{ab}) at which the electric arc is switched off, the heat flow (*Q̇*) from the tungsten electrode body (4) to the torch head (2) is reduced relative to the previous operating state of the TIG arc welding torch, or as a result of an increase in the amount of coolant occurring only within a definable time interval after the time at which the electric arc is switched on, the heat flow (*Q̇*) from the tungsten electrode body (4) to the torch head (2) is increased relative to the previous operating state of the TIG arc welding torch.

2. Device according to Claim 1, **characterized in that** the control device (6) has a timing element associated therewith, in such a manner that the definable temporal interval can be defined by a time window, which is formed in the range around the switch-off time and/or switch-on time of the welding current, and the width thereof is specified by the values of lead time (Tᵥ) and lag time (Tₙ).

3. Device according to Claim 2, **characterized in that** the length of the lead time (Tᵥ) and/or the length of the lag time (Tₙ) is proportional to the amplitude of the welding current.

4. Device according to any one of Claims 1 to 3, **characterized in that** the control device (6) has a further timing element, by means of which the welding current (Iₛ) can be controlled in such a manner that, following a further definable time after the electric arc is switched off and the amount of coolant is reduced, the welding current can be switched on again.

5. Device according to any one of Claims 1 to 4, **characterized in that** the torch head consists of a housing cylinder (11) with an upper lid closure (12), through which at least one feed line (13) and one return line (14) for the coolant and a process gas supply line (15) and an electrical connection (16) for the operation of the tungsten electrode (3) are guided.

6. Device according to Claims 5, **characterized in that** the torch head (2) comprises an elongated heat sink (17) located inside the housing cylinder (11) and an elongated cavity (18) located therein, open at the upper front face (19) of the heat sink (17), and an inner lid closure (20) located thereon, through which the flow lines (13, 14) for the coolant pass.

7. Device according to Claims 5 and 6, **characterized in that** the torch head (2, 10) has a countersunk threaded hole (23) on the lower front face (11) of the heat sink (17) along the torch head axis (22), into which the tungsten electrode (3) can be screwed.

8. Device according to any one of Claims 5 to 7, **characterized in that** the torch head has a screw-mountable gas nozzle (27) connected to the elongated heat sink (17) by the introduction of longitudinal channels (26), which surrounds the heat sink (17) and the tungsten electrode (3).

9. Device according to Claims 1 to 8, **characterized in that** in its upper section facing the torch head, the tungsten electrode (3) has a cylindrical region with a thread matched to the threaded hole (23).

10. Device according to Claims 1 to 9, **characterized in that** the electrode (3) is joined together with an electrode holder (24) having a passage (25), into which the cylindrical region of the electrode (3) is securely fitted by soldering or press insertion, wherein the electrode holder (24) has an external thread matched to the threaded hole (23) for screwing into the threaded hole (23) to provide retention.

11. Device according to Claims 1 to 10, **characterized in that** the cooling inside the heat sink (17) is implemented as a liquid cooling system.

12. Device according to Claims 1 to 11, **characterized in that** between the elongated heat sink (17) and the gas nozzle (27) longitudinal channels (26) are present, which are oriented in the axial direction towards the torch head axis (22) and are mounted on the outer wall (29) of the heat sink (17) and/or on the inner wall of the gas nozzle (27).

13. Torch for an arc welding device with a torch head and with a tungsten electrode, **characterized in that** the torch head (2, 10) is implemented according to any one of Claims 1 to 12.

14. Method for operating a TIG arc welding device, in which a torch head (2), on the underside of which is arranged a tungsten electrode (3) which has a tip region (4) tapering towards the workpiece (1), in particular in a conical manner, is supplied with coolant via a coolant circuit and in which the electrical power for the welding or soldering process is supplied via an energy source (5) having a control unit (6), **characterized in that** the coolant in the coolant circuit (7, 7a, 7b) is metered in such a manner that the heat flow (*Q̇*) from the tip region (4) of the electrode (3) to the torch head (2, 10) is reduced by a reduction in the amount of coolant within a definable time interval before the time (t_{ab}) at which the electric arc is switched off relative to the previous operating state of the TIG arc welding device, or that the heat flow (*Q̇*) from the tip region (4) of the electrode (3) to the torch head (2, 10) is increased by an increase in the amount of coolant occurring only within a definable time interval after the time at which the electric arc is switched on, relative to the previous operating state of the TIG arc welding device.

15. Method according to Claim 14, **characterized in that** within the definable time interval before the time at which the arc is switched off, the amount of coolant is reduced to the value zero.

16. Method according to Claim 15, **characterized in that** at a time tᵥ before the electric arc is switched off in accordance with a definable temporal function, in particular a step function or a linear function, the amount of coolant is reduced to the value zero.

17. Method according to any one of Claims 14 to 16, **characterized in that** the time tᵥ is dependent on the amplitude of the welding current.

18. Method according to any one of the preceding Claims 14 to 17, **characterized in that** during a pulsed welding current process a pulsed cooling also takes place.

## Revendications

1. Appareil de soudage à l'arc TIG avec une tête de brûleur (2, 10) sur la face inférieure de laquelle une électrode en tungstène (3) est disposée, laquelle présente une zone de pointe (4) se rétrécissant de préférence en forme de cône vers la pièce (1), avec un circuit de refroidissement (7, 7a, 7b) mettant à disposition un fluide de refroidissement pour l'alimentation de la tête de brûleur (2, 10) et avec une source d'énergie (5) présentant une unité de commande (6) pour l'alimentation en puissance électrique du processus de soudage ou de brasage, une unité de dosage (9) pouvant être commandée pour le fluide de refroidissement étant prévue dans le circuit de refroidissement (7, 7a, 7b), **caractérisé en ce que** l'unité de dosage (9) est commandée par l'unité de commande (6) de manière à ce que, suite à une réduction de la quantité de fluide de refroidissement dans les limites d'un laps de temps prédéfinissable avant le moment d'extinction (t_{ab}) de l'arc électrique, le flux de chaleur (*Q̇*) du corps d'électrode en tungstène (4) vers la tête de brûleur (2) est réduit par rapport à l'état de fonctionnement précédent de l'appareil de soudage à l'arc TIG ou bien **en ce que**, suite à une augmentation de la quantité de fluide de refroidissement, seulement dans les limites d'un laps de temps prédéfinissable après le moment d'allumage de l'arc électrique, on augmente le flux de chaleur (*Q̇*) du corps d'électrode en tungstène (4) vers la tête de brûleur (2) par rapport à l'état de fonctionnement précédent de l'appareil de soudage à l'arc TIG.

2. Dispositif selon la revendication 1, **caractérisé en ce qu'**un élément de temporisation est associé au dispositif de commande (6) de manière à ce que le laps de temps prédéfinissable puisse être défini grâce à une fenêtre temporelle, laquelle est réalisée autour du moment de coupure ou de rétablissement du courant de soudage et dont la largeur est fixée par les valeurs du temps de mise en route (Tᵥ) et du temps de retard (Tₙ).

3. Dispositif selon la revendication 2, **caractérisé en ce que** la longueur du temps de mise en route (Tᵥ) et/ou la longueur du temps de retard (Tₙ) est proportionnelle à l'amplitude du courant de soudage.

4. Dispositif selon l'une des revendications 1 à 3, **caractérisé en ce que** le dispositif de commande (6) présente un autre élément de temporisation grâce auquel le courant de soudage (Iₛ) peut être commandé de manière à ce que, après un autre temps prédéfinissable après l'extinction de l'arc électrique et la réduction de la quantité de fluide de refroidissement, il est possible de de nouveau rétablir le courant de tension.

5. Dispositif selon l'une des revendications 1 à 4, **caractérisé en ce que** la tête de brûleur se compose d'un cylindre-boîtier (11) avec une fermeture à couvercle (12) supérieure, à travers lequel passent au moins une conduite d'aller (13) et une conduite de retour (14) pour le fluide de refroidissement ainsi qu'une conduite d'alimentation en gaz de traitement (15) et une connexion électrique (16) pour le fonctionnement de l'électrode en tungstène (3).

6. Dispositif selon la revendication 5, **caractérisé en ce que** la tête de brûleur (2) présente un corps de refroidissement oblong (17) se trouvant à l'intérieur du cylindre-boîtier (11) et un espace creux (18) oblong se trouvant à l'intérieur de celui-ci, ouvert sur la face frontale supérieure (19) du corps de refroidissement (17), ainsi qu'une fermeture de couvercle intérieure (20) se trouvant là-dessus, à travers laquelle passent les conduites (13, 14) pour le fluide de refroidissement.

7. Dispositif selon les revendications 5 ou 6, **caractérisé en ce que** la tête de brûleur (2, 10) présente un taraudage (23) aménagé sur la face frontale inférieure (11) du corps de refroidissement (17) le long de l'axe de tête de brûleur (22), dans lequel il est possible de visser l'électrode en tungstène (3).

8. Dispositif selon l'une des revendications 5 à 7, **caractérisé en ce que** la tête de brûleur présente une buse à gaz (27) pouvant être vissée en liaison avec le corps de refroidissement oblong (17) en intégrant des canaux longitudinaux (26), laquelle entoure le corps de refroidissement (17) et l'électrode en tungstène (3).

9. Dispositif selon les revendications 1 à 8, **caractérisé en ce que** l'électrode en tungstène (3) présente, dans sa partie supérieure tournée vers la tête de brûleur, une zone cylindrique avec un filetage adapté au taraudage (23).

10. Dispositif selon les revendications 1 à 9, **caractérisé en ce que** l'électrode (3) est assemblée avec une fixation d'électrode (24) présentant un passage (25) dans lequel la zone cylindrique de l'électrode (3) est fixée de manière ajustée à l'aide d'un soudage ou d'un pressage, la fixation d'électrode (24) possédant un filetage extérieur adapté au taraudage (23) pour le vissage de maintien dans le taraudage (23).

11. Dispositif selon les revendications 1 à 10, **caractérisé en ce que** le refroidissement à l'intérieur du corps de refroidissement (17) est réalisé en tant que refroidissement par liquide.

12. Dispositif selon les revendications 1 à 11, **caractérisé en ce que**, entre le corps de refroidissement oblong (17) et la buse à gaz (27), il y a des canaux longitudinaux (26) orientés en direction axiale par rapport à l'axe de tête de brûleur (22), lesquels sont disposés sur la paroi extérieure (29) du corps de refroidissement (17) et/ou sur la paroi intérieure de la buse à gaz (27).

13. Brûleur pour un appareil de soudage à l'arc avec une tête de brûleur et avec une électrode en tungstène, **caractérisé en ce que** la tête de brûleur (2, 10) est réalisée selon l'une des revendications 1 à 12.

14. Procédé pour faire fonctionner un appareil de soudage à l'arc TIG, dans lequel une tête de brûleur (2), sur la face inférieure de laquelle une électrode en tungstène (3) est disposée, laquelle présente une zone de pointe (4) se rétrécissant de préférence en forme de cône vers la pièce (1), est alimentée par un fluide de refroidissement par l'intermédiaire d'un circuit de refroidissement et dans lequel l'alimentation en puissance électrique du processus de soudage ou de brasage s'effectue via une source d'énergie (5) présentant une unité de commande (6), **caractérisé en ce que** le fluide de refroidissement dans le circuit de refroidissement (7, 7a, 7b) est dosé de manière à ce que le flux de chaleur (*Q̇*), de la zone de pointe (4) de l'électrode (3) jusque vers la tête de brûleur (2, 10), est réduit grâce à une réduction de la quantité de fluide de refroidissement dans les limites d'un laps de temps prédéfinissable avant le moment d' extinction (t_{ab}) de l'arc électrique par rapport à l'état de fonctionnement précédent de l'appareil de soudage à l'arc TIG, ou bien **en ce que** l'on augmente le flux de chaleur (*Q̇*) de la zone de pointe (4) de l'électrode (3) jusque vers la tête de brûleur (2, 10) grâce à une augmentation de la quantité de fluide de refroidissement seulement dans les limites d'un laps de temps prédéfinissable après le moment d'allumage de l'arc électrique par rapport à l'état de fonctionnement précédent de l'appareil de soudage à l'arc TIG.

15. Procédé selon la revendication 14, **caractérisé en ce que**, dans les limites du laps de temps prédéfinissable avant le moment d'extinction de l'arc électrique, la quantité de fluide de refroidissement est réduite à la valeur de zéro.

16. Procédé selon la revendication 15, **caractérisé en ce que** la quantité de fluide de refroidissement, à un moment tᵥ avant l'extinction de l'arc électrique, est réduite à la valeur de zéro conformément à une fonction temporelle prédéfinissable, en particulier une fonction de saut ou une fonction linéaire.

17. Procédé selon l'une des revendications 14 à 16, **caractérisé en ce que** le temps tᵥ dépend de l'amplitude du courant de soudage.

18. Procédé selon l'une des revendications précédentes 14 à 17 concernant le procédé, **caractérisé en ce que**, pendant un processus de courant de soudage pulsé, il s'en suit également un refroidissement pulsé.
